# EUROPÄISCHE PATENTSCHRIFT

(11) **EP 2 995 504 B1**
(45) Veröffentlichungstag und Bekanntmachung des Hinweises auf die Patenterteilung: **28.02.2018**
(21) Anmeldenummer: 15183549.3
(22) Anmeldetag: 02.09.2015
(51) Int. Cl.: B60R 9/06

(54) **HECKTRÄGER FÜR EIN KRAFTFAHRZEUG**
REAR CARRIER FOR A MOTOR VEHICLE
SUPPORT DE TOIT POUR UN VEHICULE AUTOMOBILE

(30) Priorität: 15.09.2014 DE 102014218482
(43) Veröffentlichungstag der Anmeldung: 16.03.2016
(73) Patentinhaber: ATERA GmbH, 88299 Leutkirch im Allgäu (DE)
(72) Erfinder: Pickl, Adolf, 87487 Wiggensbach (DE); Zendath, Thomas, 87660 Irsee (DE)
(74) Vertreter: Patentanwälte Ruff, Wilhelm, Beier, Dauster & Partner mbB

(56) Entgegenhaltungen:
- DE-U1-202012 101 729
- DE-U1-202012 103 182
- US-A- 1 848 401
- US-A- 5 456 564
- US-A1- 2009 255 445

## Beschreibung

Die Erfindung betrifft einen Heckträger für ein Kraftfahrzeug mit einer Halterung zur fahrzeugfesten Sicherung des Heckträgers, mit einem Tragrahmen, an dem die Halterung angeordnet ist, und an dem wenigstens eine Funktionsplattform gelagert ist, die relativ zum Tragrahmen um eine Klappachse in eine kompakte Lagerstellung umklappbar und um eine Kippachse in eine Be- und Entladestellung abkippbar gelagert ist, die in montiertem Zustand des Heckträgers in Fahrzeugquerrichtung erstreckt ist.

Ein derartiger Heckträger für ein Kraftfahrzeug ist aus der DE 20 2012 103 182 U1 bekannt. Der bekannte Heckträger weist einen Tragrahmen auf, der an einem Kugelkopf einer Anhängekupplung eines Kraftfahrzeugs befestigbar ist. Dem Tragrahmen ist eine Funktionsplattform zur Befestigung von Fahrrädern zugeordnet, die zum einen relativ zum Tragrahmen auf jeder Seite um jeweils eine Klappachse in eine kompakte Lagerstellung verschwenkbar ist, und die zum anderen um eine in Fahrzeugquerrichtung erstreckte Kippachse in eine Be- und Entladestellung abkippbar gelagert ist.

Ein weiterer Heckträger ist aus der DE 10 2008 006 814 A1 bekannt. Der bekannte Heckträger ist für die Montage in einem Heckbereich eines Personenkraftwagens vorgesehen und weist einen Tragrahmen auf, der relativ zum Kraftfahrzeug zwischen einer Betriebsstellung und einer Be- und Entladestellung um eine in Fahrzeugquerrichtung erstreckte Schwenkachse schwenkbeweglich gelagert ist. An dem Tragrahmen sind mehrere Funktionsplattformen vorgesehen, die zur Abstützung und Sicherung von Fahrrädern dienen. Diese Funktionsplattformen sind um in Fahrzeuglängsrichtung erstreckte Klappachsen zwischen einer Nichtgebrauchsstellung und einer Funktionsstellung schwenkbeweglich gelagert.

Aufgabe der Erfindung ist es, einen Heckträger der eingangs genannten Art zu schaffen, der eine gute Funktionalität bei gleichzeitig einfachem Aufbau besitzt.

Diese Aufgabe wird dadurch gelöst, dass die Klappachse und die Kippachse in einem spitzen Winkel relativ zueinander ausgerichtet und durch ein einteiliges Trägerprofil definiert sind, das relativ zu dem Tragrahmen um die Kippachse drehbar gelagert ist, und an dem die wenigstens eine Funktionsplattform schwenkbeweglich gelagert ist. Das Trägerprofil weist insbesondere wenigstens eine Abwinklung auf, wobei der durch die Abwinklung gebildete Profilabschnitt vorzugsweise koaxial zu der Klappachse und der andere Profilabschnitt koaxial zu der Kippachse ausgerichtet sind. Die Abwinklung kann insbesondere durch Kröpfen eines entsprechenden metallischen Trägerprofils erzielt werden, so dass das Trägerprofil ein gekröpftes einteiliges Trägerprofil darstellt. Das gekröpfte Trägerprofil weist eine Doppelfunktion auf, indem es zum einen die wenigstens eine Funktionsplattform schwenkbeweglich trägt und zum anderen selbst um die Kippachse drehbar gelagert ist, um die wenigstens eine Funktionsplattform in die Be- und Entladestellung abkippen zu können. Alternativ kann ein abgewinkelter Stimendbereich des Trägerprofils die Klappachse durch einen Lagerzapfen oder eine koaxiale Lagerbohrung bilden. Unter der Einteiligkeit des Trägerprofils ist auch eine einteilige Baueinheit zu verstehen, bei der mehrere Teile und Abschnitte zu dem Trägerprofil lösbar oder unlösbar einteilig verbunden werden. Die erfindungsgemäße Lösung eignet sich in besonders vorteilhafter Weise für Heckträger, die heckseitig an Kugelköpfen von Anhängerkupplungen von Personenkraftwagen befestigt werden. Hierzu ist dem Tragrahmen des Heckträgers eine Kupplungseinrichtung zugeordnet, die mit dem Kugelkopf zusammenwirkt. Alternativ kann als Halterung zur Sicherung des Heckträgers am Heckbereich des Personenkraftwagens auch eine Stecksicherung oder eine anders gestaltete Haltevorrichtung zur lösbaren Verbindung mit dem Heckbereich des Personenkraftwagens vorgesehen sein. In vorteilhafter Weise sind mehr als eine Funktionsplattform vorgesehen. Als Funktionsplattform werden Halte- und Aufnahmeträger vorgesehen, auf denen Freizeitgeräte wie Fahrräder oder Ähnliche abgestellt und gesichert werden können, um diese gemeinsam mit dem Personenkraftwagen transportieren zu können. Eine entsprechende Funktionsplattform kann ein- oder mehrteilig aufgebaut sein. Zur Befestigung der entsprechenden Freizeitgeräte wie Fahrräder oder Ähnlichem an der wenigstens einen Funktionsplattform sind Sicherungs- oder Halteelemente vorgesehen, die das entsprechende Freizeitgerät auf der Funktionsplattform in einer definierten Position stützen und befestigen. Das Trägerprofil ist einteilig gestaltet. Die einteilige Gestaltung kann durch ein einstückiges, entsprechend abgewinkeltes Hohl- oder Vollprofil aus Metall, oder durch mehrere Profilabschnitte gebildet sein, die zu dem als einteiliges Bauteil handhabbaren Trägerprofil starr zusammengefügt werden. Durch die erfindungsgemäße Lösung wird ein im Fahrbetrieb wesentlich schwingungsärmerer Heckträger geschaffen, der einen sichereren Transport von großen Freizeitgeräten wie Fahrrädern ermöglicht. Zudem weist der erfindungsgemäße Heckträger einen besonders kompakten Aufbau auf. In der Ruhestellung der wenigstens einen Funktionsplattform ist der Heckträger schmal zusammengeklappt, so dass er für den Nichtgebrauch keinen großen Lagerraum benötigt. Durch die erfindungsgemäße Lösung kann der Heckträger zudem aus einer gegenüber dem Stand der Technik reduzierten Anzahl von Bauteilen montiert werden, was die Herstellung und Montage vereinfacht und die Kosten für Herstellung und Montage des Heckträgers reduziert. Erfindungsgemäß kann auch der Tragrahmen selbst einen vereinfachten Aufbau aufweisen. Denn das Trägerprofil kann als heckseitiger Querträger des Tragrahmens dienen und trägt damit direkt zur Versteifung des Tragrahmens bei. Vorzugsweise sind die Klappachsen derart schräg ausgerichtet, dass Kräfte, die während eines Fahrbetriebs eines Kraftfahrzeugs auf die wenigstens eine Funktionsplattform des Heckträgers wirken, besonders gut über das Trägerprofil aufgenommen werden können.

In Ausgestaltung der Erfindung sind zwei spiegelsymmetrisch zueinander klappbare Funktionsplattformen vorgesehen, die um jeweils eine Klappachse am Trägerprofil gelagert sind, und die beiden Klappachsen und die Kippachse des Trägerprofils sind in fahrzeugseitig montiertem Zustand des Heckträgers in einer vertikalen Fahrzeugquerebene ausgerichtet. In vorteilhafter Weise sind die beiden Klappachsen um jeweils betragsmäßig gleiche spitze Winkel relativ zu der in Fahrzeugquerrichtung erstreckten Kippachse des Trägerprofils spiegelsymmetrisch jeweils nach außen ansteigend ausgerichtet, um eine Verschwenkung der Funktionsplattformen aus einer horizontalen in eine vertikale Stellung durch einfaches Verdrehen um die entsprechende Klappachse zu ermöglichen. Dadurch, dass die beiden Klappachsen und die Kippachse mit einer vertikalen Fahrzeugquerebene ausgerichtet sind, ist die Funktionsplattform in einer ersten Endstellung, d.h. in einer Funktionsstellung, in montiertem Zustand des Heckträgers etwa horizontal ausgerichtet und in der zweiten Endstellung, nämlich der Ruhestellung, aufrecht oder geneigt nach oben erstreckt, so dass der Heckträger insgesamt kompaktere Außenkonturen aufweist als in der Funktionsstellung der Funktionsplattformen. Die vertikale Fahrzeugquerebene, in der die Kippachse und die Klappachsen des Trägerprofils in montiertem Zustand des Heckträgers an einem entsprechenden Kraftfahrzeug ausgerichtet sind, ist eine vertikale Querebene, die hinter dem Heckbereich des Kraftfahrzeugs in Fahrzeugquerrichtung ausgerichtet ist.

In weiterer Ausgestaltung der Erfindung weist das Trägerprofil einen Mittelabschnitt sowie zwei an gegenüberliegenden Seiten des Mittelabschnitts winklig abragende Lagerzapfen auf, wobei der Mittelabschnitt um die Kippachse drehbar gelagert ist und die Lagerzapfen jeweils eine Funktionsplattform um die Klappachse drehbar lagern. Vorzugsweise sind die Lagerzapfen als Profilschenkel gekröpft relativ zum Mittelabschnitt ausgerichtet und das Trägerprofil stellt ein einstückiges Hohlprofil aus einer Leichtmetalllegierung, insbesondere einer Aluminiumlegierung, dar, das den Mittelabschnitt und die Profilschenkel bildet. In vorteilhafter Weise sind die Lagerzapfen als relativ zum Mittelabschnitt gegensinnig gekröpfte Profilschenkel gestaltet. Altemativ sind die Lagerzapfen in winklig ausgerichtete Stirnendbereiche des Trägerprofils integriert.

In weiterer Ausgestaltung der Erfindung ist der Mittelabschnitt zylindrisch gestaltet. Hierdurch ist eine besonders einfache Lagerung des Trägerprofils am Tragrahmen ermöglicht, da bei zylindrischer Gestaltung des Mittelabschnitts die Kippachse in einfacher Weise die koaxiale Mittellängsachse des zylindrischen Mittelabschnitts bildet.

In weiterer Ausgestaltung der Erfindung sind die Profilschenkel zylindrisch gestaltet. Dadurch können die Profilschenkel selbst direkt als zylindrische Lagerzapfen für eine drehbare Lagerung der jeweiligen Funktionsplattform dienen. Auch hier ist die entsprechende Klappachse identisch mit der Mittellängsachse des jeweiligen zylindrischen Profilschenkels.

Der Mittelabschnitt und die beiden Profilschenkel werden entweder durch Kaltverformung aus einem entsprechenden metallischen Hohlprofil hergestellt, oder sie werden als separate Hohlprofilabschnitte hergestellt, die anschließend in gewünschter Ausrichtung miteinander verschweißt oder in ähnlicher Weise stoffschlüssig miteinander verbunden werden.

In weiterer Ausgestaltung der Erfindung sind dem Trägerprofil Endanschläge zur Begrenzung der Kippbeweglichkeit um die Kippachse zugeordnet. Dadurch ist gewährleistet, dass das Trägerprofil, an dem auch die Funktionsplattformen angeordnet sind, sowohl in der Betriebsstellung als auch in der Be- und Entladestellung sicher positioniert ist. In vorteilhafter Weise können dem Trägerprofil zusätzliche Arretierungen für diese Endstellungen zugeordnet sein, die vorzugsweise federbelastet automatisch einrasten und manuell lösbar sind.

In weiterer Ausgestaltung der Erfindung weist der Tragrahmen wenigstens eine Lageraufnahme zur kippbeweglichen Lagerung des Trägerprofils auf. Vorzugsweise wird die wenigstens eine Lageraufnahme durch eine Lagerschale oder eine Lagerhülse gebildet, die heckseitig von dem Tragrahmen abragt und den Mittelabschnitt des Trägerprofils umgreift. Die Lageraufnahme ist vorzugsweise ein separates Lagerbauteil, das fest mit dem Tragrahmen verbunden ist.

In weiterer Ausgestaltung der Erfindung weisen die Profilschenkel des Trägerprofils und/oder korrespondierende Lagerteile jeder Funktionsplattform Endanschläge zur Begrenzung der Schwenkbeweglichkeit der Funktionsplattformen relativ zu den Schenkeln auf. Dadurch ist gewährleistet, dass den Funktionsplattformen definierte Endstellungen zugeordnet sind, in denen diese gegen eine weitere Schwenk- oder Drehbewegung blockiert sind. Vorzugsweise sind den Endanschlägen zusätzliche mechanische Arretiermittel zugeordnet, die die jeweilige Funktionsplattform in der entsprechenden Endstellung am Trägerprofil sichern, und die manuell lösbar sind. Lagerteile sind Lagerzapfen, Lageraufnahmen und ähnliche Teile, die eine Drehlagerfunktion für die Funktionsplattformen und/oder das Trägerprofil definieren.

Weitere Vorteile und Merkmale der Erfindung ergeben sich aus den Ansprüchen. Nachfolgend sind bevorzugte Ausführungsbeispiele der Erfindung beschrieben und anhand der Zeichnungen dargestellt.
- Fig. 1: zeigt in perspektivischer Darstellung eine erste Ausführungsform eines erfindungsgemäßen Heckträgers für einen Personenkraftwagen,
- Fig. 2: eine Anordnung des Heckträgers nach Fig. 1 an einem Heckbereich eines Personenkraftwagens in einer Betriebsstellung,
- Fig. 3: die Anordnung des Heckträgers an dem Personenkraftwagen in einer abgekippten Be- und Entladestellung,
- Fig. 4 bis 6: den Heckträger nach den Fig. 2 und 3 in unterschiedlichen Stellungen einer Funktionsplattform,
- Fig. 7: den Heckträger nach den Fig. 2 bis 6 in einer Ruhestellung,
- Fig. 8: eine weitere Ausführungsform eines erfindungsgemäßen Heckträgers unter Weglassung zugehöriger Funktionsplattformen,
- Fig. 9: den Heckträger nach Fig. 8 einschließlich von zwei zugehörigen Funktionsplattformen und
- Fig. 10 bis 12: den Heckträger nach Fig. 9 in unterschiedlichen Stellungen der Funktionsplattformen.

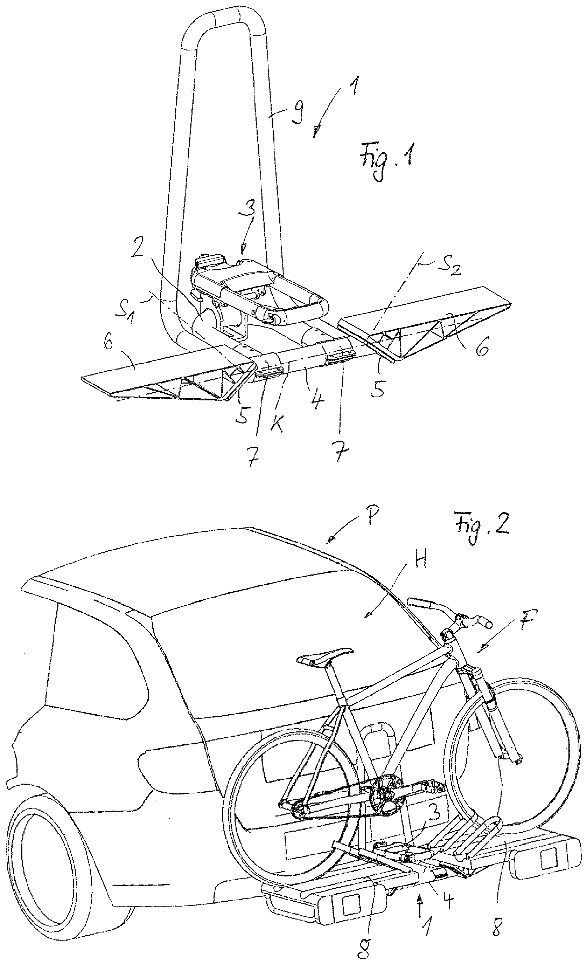

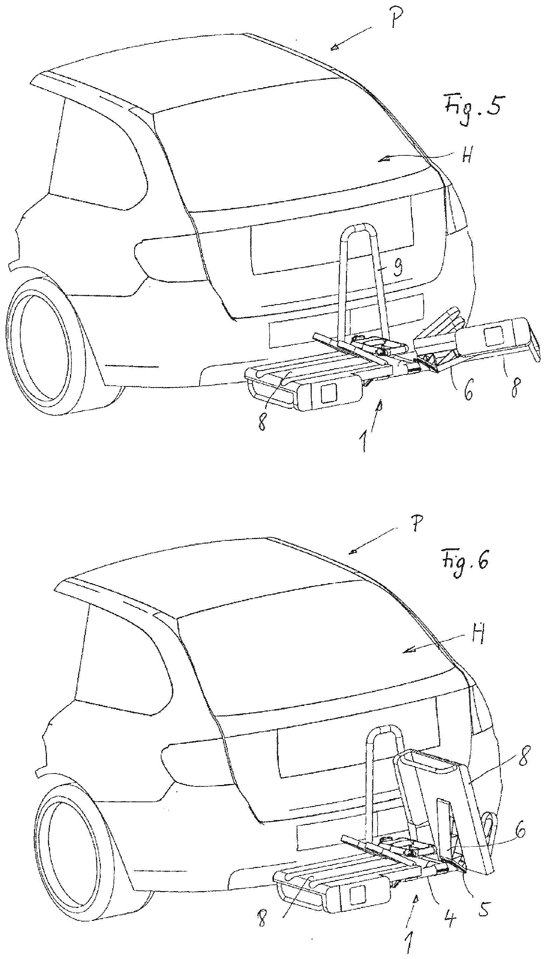

Ein Personenkraftwagen P gemäß den Fig. 2 bis 6 weist in einem Heckbereich eine Heckklappe H auf, die um eine in Fahrzeugquerrichtung erstreckte Schwenkachse aus dem dargestellten, geschlossenen Zustand nach hinten und nach oben aufschwenkt, um in die geöffnete Stellung überführt zu werden. Ein Heckbereich des Personenkraftwagens P ist unterhalb eines heckseitigen Stoßfängers mit einem Kugelkopf einer Anhängekupplung versehen. Auf dem Kugelkopf ist gemäß den Darstellungen nach den Fig. 2 bis 6 ein Heckträger 1 befestigt, der anhand der Fig. 1 sowie anhand der Fig. 2 bis 7 näher erläutert wird.

Der Heckträger 1 gemäß den Fig. 1 bis 7 weist einen Tragrahmen 2 auf, der als einfaches, unförmig gebogenes Rahmenprofil gestaltet ist. Das Rahmenprofil weist zwei U-Schenkel auf, die in einer gemeinsamen Ebene liegen und parallel zueinander ausgerichtet sind. Die beiden U-Schenkel sind über einen Krümmungsbereich einstückig miteinander verbunden, an dem eine Halterung 3 starr befestigt ist, die zur Fixierung des Rahmenprofils an dem Kugelkopf der Anhängekupplung des Personenkraftwagens P vorgesehen ist. Die Halterung 3 weist in grundsätzlich bekannter Weise eine Klemmeinheit auf, die in montiertem Zustand den Kugelkopf form- und kraftschlüssig umschließt. Die Halterung 3 wird mittels eines beweglichen Betätigungsgriffs manuell in eine entsprechende Klemmposition gespannt oder aus der Klemmposition gelöst, um den Heckträger 1 von dem Kugelkopf der Anhängekupplung wieder entfernen zu können.

An Stimendbereichen der beiden USchenkel sind zwei Lageraufnahmen 7 für einen Mittelabschnitt eines Trägerprofils 4 vorgesehen, das in den Lageraufnahmen um eine in montiertem Zustand in Fahrzeugquerrichtung erstreckte Kippachse K begrenzt drehbeweglich gelagert ist. Die Lageraufnahmen 7 werden durch jeweils zwei zueinander komplementäre Lagerschalen gebildet, die einen zylindrischen Mantel des Mittelabschnitts des Trägerprofils 4 umschließen. Die Lagerschalen der Lageraufnahmen 7 sind mit Befestigungsschalen einstückig verbunden, die die Stirnendbereiche der U-Schenkel des Rahmenprofils 2 umgreifen und insbesondere durch Vernieten oder durch andere Befestigungsmittel fest mit diesem verbunden sind. Auch das Rahmenprofil 2 weist, wie das Trägerprofil 4, eine zylindrische Mantelfläche auf. Sowohl das Rahmenprofil 2 als auch das Trägerprofil 4 sind aus einem zylindrischen Hohlprofil hergestellt, das aus einer Leichtmetalllegierung, insbesondere einer Aluminiumlegierung besteht.

Das Trägerprofil 4 ist relativ zu dem Rahmenprofil 4 um die Kippachse K drehbar. Das Trägerprofil 4 trägt über seine Anbindung an das Rahmenprofil 2 mittels der Lageraufnahmen 7 zur Versteifung des als Tragrahmen 2 dienenden Rahmenprofils bei, indem das Trägerprofil 4 über die Lageraufnahmen 7 die Stirnendbereiche der beiden U-Schenkel des Rahmenprofils miteinander verbindet. Die beiden U-Schenkel des Rahmenprofils sind in montiertem Zustand parallel zueinander in Fahrzeuglängsrichtung erstreckt.

Das Trägerprofil 4 ist an seinen gegenüberliegenden Stirnenden, jeweils seitlich außerhalb der Lageraufnahmen 7, mit jeweils einem Stützteller 5 versehen, der als rechteckige, insbesondere als quadratische ebene Platte gestaltet ist. Der Stützteller 5 ist in einem spitzen Winkel von insbesondere etwas mehr als 45° relativ zur Kippachse K an dem jeweiligen Stirnende des Trägerprofils 4 schräg ausgerichtet und insbesondere durch Verschweißen mit dem jeweiligen Stirnende des Trägerprofils 4 fest verbunden. Jeder Stützteller 5 ist mit einem nicht dargestellten Lagerzapfen versehen, der durch Verschweißung oder Verschraubung oder in ähnlicher Art und Weise an dem Trägerprofil 4 oder dem Stützteller 5 integriert befestigt ist und von einer Oberfläche des jeweiligen Stütztellers 5 rechtwinklig schräg nach oben und nach außen abragt. Jeder Lagerzapfen bildet so jeweils eine relativ zum Trägerprofil 4 starre Drehachse S₁, S₂, die auch als Klappachsen bezeichnet werden. Die beiden Drehachsen S₁, S₂ ragen koaxial zum jeweiligen Lagerzapfen lotrecht von der jeweiligen Oberfläche des jeweiligen Stütztellers 5 ab und sind dadurch in einem spitzen Winkel von insbesondere etwa 45° relativ zur Kippachse K in einer vertikalen Fahrzeugquerebene schräg nach oben und nach außen erstreckt, wie den strichpunktierten Linien für die Drehachsen S₁, S₂ und die Kippachse K zu entnehmen ist.

Auf jedem Lagerzapfen ist jeweils eine Funktionsplattform 6, 8 des Heckträgers 1 verdrehbar gelagert, wobei eine entsprechende Verdrehebene jeweils der durch die ebene Oberfläche der Stützteller bzw. der jeweiligen durch den Lagerzapfen definierten Radialebene relativ zu der jeweiligen Drehachse S₁, S₂ entspricht. Jede Funktionsplattform 6, 8 wird durch eine Trägerkonstruktion 6 sowie durch eine Funktionsstruktur 8 gebildet, wobei die Funktionsstruktur 8 auf der Trägerkonstruktion 6 starr befestigt ist. Die Funktionsstruktur 8 weist Halte- und Stützmittel für zwei Fahrräder F sowie jeweils eine Schlussleuchtenanordnung auf. Zusätzlich ist wenigstens eine der beiden Funktionsstrukturen 8 mit einem Kennzeichenhalter versehen. Die Funktionsstruktur 8 ist auf einer ebenen, plattenförmigen Oberfläche der jeweiligen Trägerkonstruktion 6 abgestützt und befestigt, so dass die jeweilige Trägerkonstruktion 6 und die zugehörige Funktionsstruktur 8 als fest miteinander verbundene Montageeinheit in Form der Funktionsplattform 6, 8 einheitlich um die jeweilige Drehachse S₁, S₂ verdrehbar sind.

Mit dem Trägerprofil 4 starr verbunden ist zudem ein Handhabungsbügel 9, der einen in der Stellung gemäß Fig. 1 vertikal nach oben ragenden, U-förmigen Bügelabschnitt sowie zwei horizontal in Fahrzeuglängsrichtung nach hinten zu dem Trägerprofil 4 abragende Befestigungsschenkel umfasst, die insbesondere durch Verschweißung oder in ähnlicher Art und Weise starr mit dem Trägerprofil 4 verbunden sind.

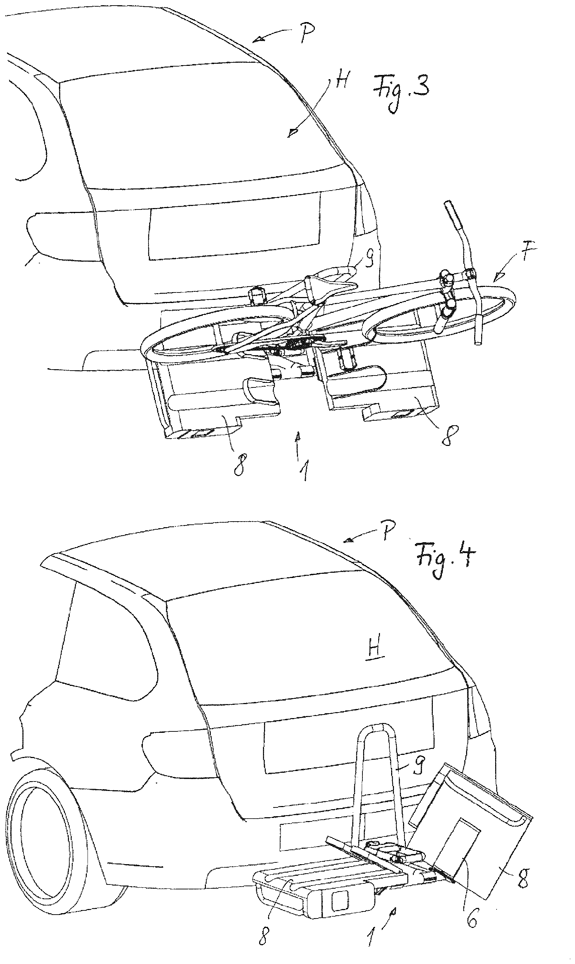

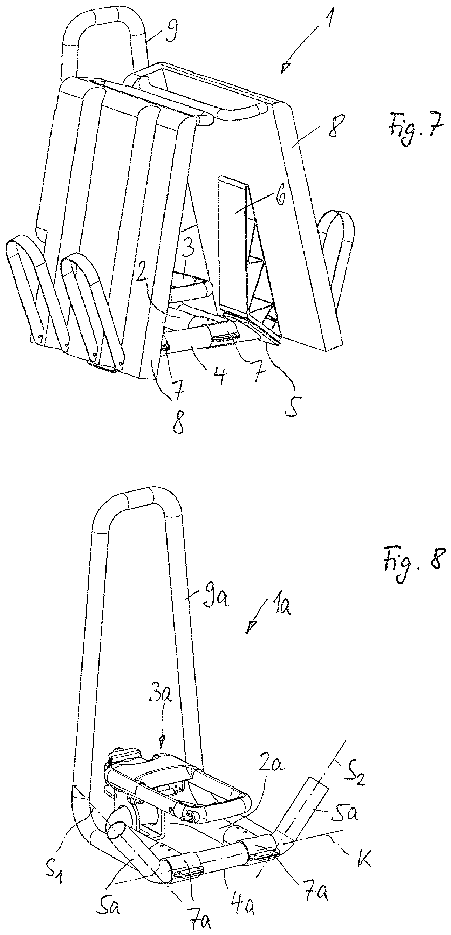

An dem Trägerprofil 4 und/oder an den Lageraufnahmen 7 sind in nicht näher dargestellter Weise Endanschläge vorgesehen, die eine Drehbeweglichkeit des Trägerprofils 4 um die Kippachse K begrenzen. Die Begrenzung mittels der Endanschläge erfolgt in zwei Endstellungen, nämlich einer normalen Betriebsstellung des Trägerprofils 4 (Fig. 1) und einer nach hinten verdrehten Be- und Entladestellung (Fig. 3). In diesen beiden Endstellungen ist das Trägerprofil 4 durch die Endanschläge gegen ein weiteres Verdrehen gestützt. Zumindest für die normale Betriebsstellung gemäß den Fig. 1 und 2 sind dem Trägerprofil 4 zudem nicht näher dargestellte Arretiermittel zugeordnet, die das Trägerprofil 4 in dieser Betriebsstellung arretieren. Die Arretiermittel sind durch eine Bedienperson mittels einer entsprechenden Handhabungsmöglichkeit lösbar. Ein entsprechendes Arretieren, vorzugsweise durch mechanische Rastmittel, erfolgt vorzugsweise zwangsläufig, sobald das Trägerprofil 4 die Betriebsstellung erreicht hat. Der Handhabungsbügel 9 verschwenkt aufgrund seiner starren Verbindung mit dem Trägerprofil 4 gemeinsam mit dem Trägerprofil 4 und den Funktionsplattformen 6, 8. Der Handhabungsbügel 9 ermöglicht es einer Bedienperson, eine Kippbewegung nach hinten oder nach vorne zu steuern und gegebenenfalls abzubremsen. Jede Trägerkonstruktion 6 der jeweiligen Funktionsplattform weist eine Lagerhülse auf, die drehbar auf den Lagerzapfen des jeweiligen Stütztellers 5 aufgeschoben ist. Die Lagerhülse ist in der Trägerkonstruktion 6 integriert und starr mit der Trägerkonstruktion 6 verbunden. Die Lagerhülse ist mit ihrem Innendurchmesser derart auf den jeweiligen Lagerzapfen abgestimmt, dass sich eine radial spielfreie Drehbeweglichkeit der Lagerhülse relativ zum Lagerzapfen ergibt. Hierdurch wird die Verdrehbarkeit der Trägerkonstruktion 6 gemeinsam mit der Funktionsstruktur 8 relativ zu dem Stützteller 5 um die jeweilige Drehachse S₁, S₂ definiert. Zwischen jedem Stützteller 5 und der zugeordneten Trägerkonstruktion 6 sind in nicht näher dargestellter Weise Endanschläge vorgesehen, die eine Verdrehbeweglichkeit der Trägerkonstruktion 6 relativ zum Stützteller 5 auf einen Verdrehwinkel von 180° beschränken. Aufgrund der spitzwinkligen Ausrichtung der schrägen Verdrehebene wird eine Oberfläche der Trägerkonstruktion 6 demzufolge aus der horizontalen Betriebsstellung gemäß Fig. 1 in eine Klappstellung gemäß Fig. 7 verdreht, in der die Oberfläche der Trägerkonstruktion 6 nach oben und leicht schräg zur Mitte hin geneigt ist, so dass die Funktionsstrukturen 8 aufrecht stehen, aber leicht schräg zur Mitte geneigt sind.

Der Winkel zwischen der jeweiligen Drehachse S₁, S₂ und der in Fahrzeugquerrichtung erstreckten Kippachse K ist etwas größer als 45°, um bei einer Verdrehung der jeweiligen Funktionsplattform 6, 8 aus der Horizontalen gemäß Fig. 1 eine leichte Schrägstellung zur Mitte hin der jeweiligen Trägerkonstruktion 6 zu erzielen, wie anhand der Fig. 7 erkennbar ist.

Auch zwischen dem jeweiligen Stützteller 5 und der jeweiligen Trägerkonstruktion 6 sind zusätzlich Arretiermittel vorgesehen, um die Trägerkonstruktion 6 relativ zu dem Trägerprofil 4, d.h. relativ zu dem jeweiligen Stützteller 5 in den beiden Endstellungen, d.h. der Betriebsstellung gemäß den Fig. 1 und 2 und der Klappstellung gemäß Fig. 7, lösbar zu arretieren. Ein Lösen der Arretiermittel erfolgt manuell durch eine Bedienperson.

Anhand der Fig. 7 ist erkennbar, dass in der Klappstellung der beiden Funktionsplattformen 6, 8 der Heckträger 1 kompakt zusammengeklappt ist und so lediglich wenig Raum beansprucht. Die beiden Drehachsen S₁, S₂ und die Kippachse K liegen in betriebsfertig montiertem Zustand des Heckträgers 1 an einem entsprechenden Personenkraftwagen P in einer gemeinsamen vertikalen Fahrzeugquerebene.

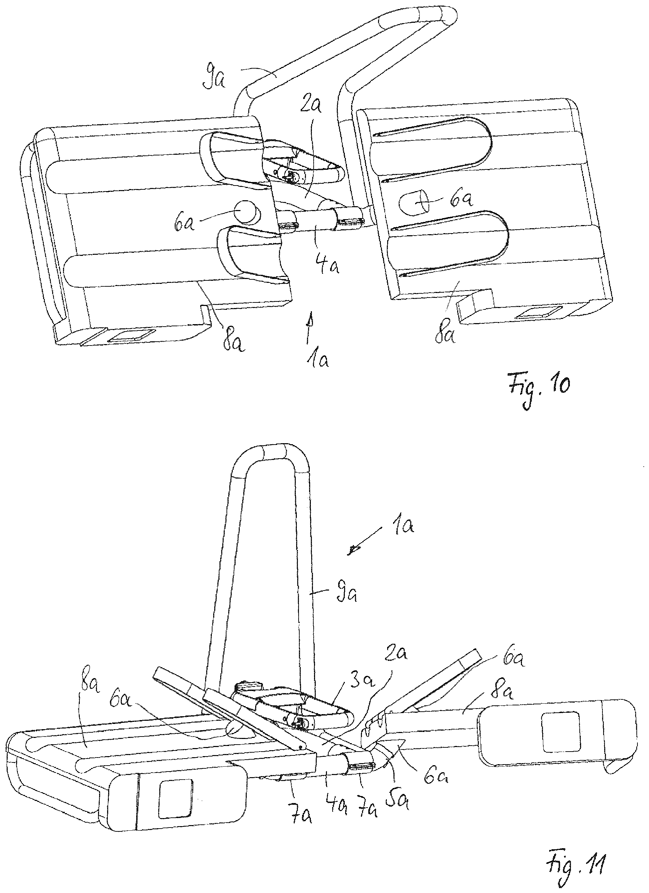

Anhand der Fig. 8 bis 12 ist eine weitere Ausführungsform eines erfindungsgemäßen Heckträgers 1a gezeigt. Der Heckträger 1a weist das gleiche Funktionsprinzip bezüglich seines Abkippens in eine Be- und Entladestellung und bezüglich der schwenkbewegüchen Klappbarkeit seiner Funktionsplattformen 6a, 8a auf, so dass nachfolgend lediglich auf die Unterschiede der konstruktiven Ausgestaltungen des Heckträgers 1a relativ zum Heckträger 1 eingegangen wird. Funktionsgleiche Teile und Abschnitte werden mit gleichen Bezugszeichen und unter Hinzufügung des Buchstabens a versehen.

Wie anhand der Fig. 8 erkennbar ist, weist der Heckträger 1a gemäß den Fig. 8 bis 12 ein Trägerprofil 4a auf, das als zylindrisches Hohlprofil gestaltet ist. Im Bereich eines Mittelabschnitts des Trägerprofils 4a ist das Trägerprofil 4a in gleicher Weise in Lageraufnahmen 7a drehbar gelagert, wie dies bei der Ausführungsform nach den Fig. 1 bis 7 der Fall ist. Auch die Gestaltung des Tragrahmens 2a und die Verbindung des Handhabungsbügels 9a mit dem Trägerprofil 4a sind identisch ausgeführt wie bei der Ausführungsform nach den Fig. 1 bis 7, so dass zur Vermeidung von Wiederholungen hierzu keine näheren Erläuterungen notwendig sind. Gleiches gilt für die Gestaltung und Befestigung der Halterung 3a am U-förmigen Krümmungsbereich des Tragrahmens 2a.

Wesentlicher Unterschied bei dem Heckträger 1a ist es, dass das Trägerprofil 4a ausgehend von seinem Mittelabschnitt zu beiden Stimenden hin in jeweils einen gekröpften Profilschenkel 5a übergeht, wobei der Mittelabschnitt und die Profilschenkel 5a einstückig aneinander anschließen. Ein gekröpfter Übergangsbereich zwischen den Profilschenkeln 5a und dem Mittelabschnitt des Trägerprofils 4a kann durch Kaltverformung hergestellt sein. Die Profilschenkel 5a sind zylindrisch gestaltet und weisen den gleichen Durchmesser auf wie der Mittelabschnitt des Trägerprofils 4a. Bei einem nicht dargestellten Ausführungsbeispiel der Erfindung sind die beiden Profilschenkel 5a durch Verschweißung mit dem Mittelabschnitt des Trägerprofils 4a verbunden.

Eine Mittellängsachse jedes Profilschenkels 5a entspricht der jeweiligen Drehachse S₁, S₂, um die die Funktionsplattformen 8a, 6a begrenzt drehbar gelagert sind. Beide Drehachsen S₁, S₂ sind ausgehend von der Kippachse K analog der Ausführungsform nach den Fig. 1 bis 7 in gleichen Winkeln schräg nach außen und nach oben gerichtet, wobei dieser Winkel betragsmäßig aus einem Bereich zwischen 40° und 60° relativ zur Kippachse K gewählt ist.

Die beiden Funktionsplattformen 6a, 8a sind durch eine becherförmige, zylindrische Stützhülse 6a sowie durch eine Funktionsstruktur 8a gebildet, die weitgehend identisch zu der Funktionsstruktur 8 gemäß den Fig. 1 bis 7 ausgeführt ist. Die becherförmige Stützhülse 6a ist bezüglich ihres Innendurchmessers derart auf den Außendurchmesser des jeweiligen Profilschenkels 5a abgestimmt, dass die Stützhülse 6a radial spielfrei drehbeweglich auf dem Profilschenkel 5a gelagert ist. Jeder Profilschenkel 5a bildet demzufolge einen Lagerzapfen für die Stützhülse 6a und demzufolge für die zugehörige Funktionsplattform 6a, 8a.

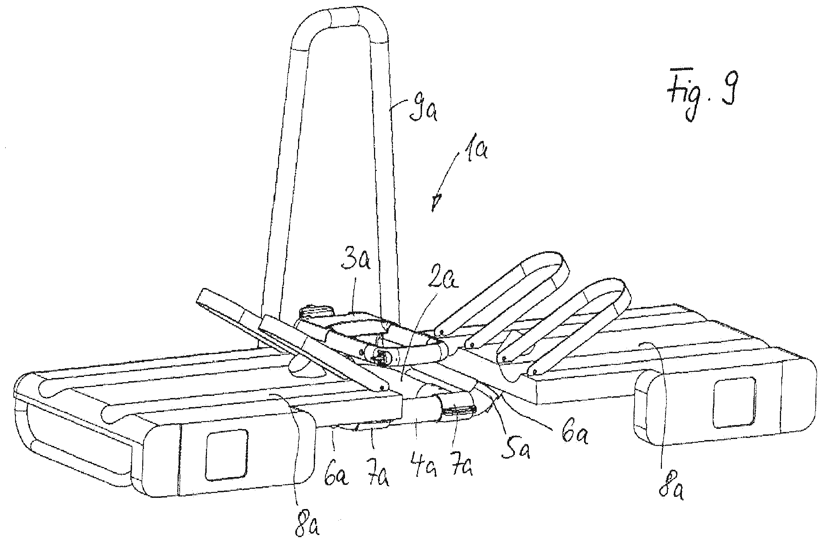

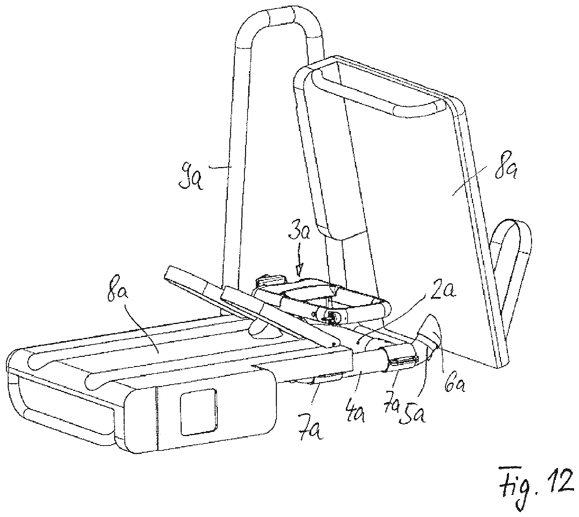

Die Stützhülse 6a ist starr mit der Funktionsstruktur 8a verbunden, wobei die starre Verbindung derart stabil ausgeführt ist, dass die Stützhülse 6a die Tragfunktion für die jeweilige Funktionsplattform 6a, 8a gegenüber dem Trägerprofil 4a bzw. dem jeweiligen Profilschenkel 5a übernimmt. Zwischen jeder Stützhülse 6a und dem zugeordneten Profilschenkel 5a sind zum einen Endanschläge vorgesehen, die die Drehbeweglichkeit der jeweiligen Funktionsplattform 6a, 8a zwischen einer Betriebsstellung gemäß Fig. 9 und einer hochgeschwenkten Ruhestellung gemäß Fig. 12 begrenzen. Zudem sind mechanisch wirksame Arretiermittel vorgesehen, die die jeweilige Funktionsplattform 6a, 8a sowohl in der Betriebsstellung als auch in der Ruhestellung (Fig. 12) sichern. Diese Arretiermittel sind durch eine Bedienperson lösbar, um die Funktionsplattform 6a, 8a für eine entsprechende Verdrehbewegung in die jeweils andere Endstellung freizugeben. Auch zwischen dem Mittelabschnitt des Trägerprofils 4a und den Lageraufnahmen 7a sind Endanschläge und wenigstens für die Betriebsstellung des Trägerprofils 4a Arretiermittel vorgesehen, die identisch gestaltet sind wie die zuvor bereits beschriebenen Arretiermittel des Heckträgers 1 gemäß den Fig. 1 bis 7. Die beiden Profilschenkel 5a und der Mittelabschnitt des Trägerprofils 4a sind in einer gemeinsamen Ebene ausgerichtet, die in der Betriebsstellung des Trägerprofils 4a einer vertikalen Fahrzeugquerebene entspricht. Diese vertikale Fahrzeugquerebene nimmt zwangsläufig auch die entsprechenden Drehachsen S₁, S₂ und die Kippachse K auf.

## Patentansprüche

1. Heckträger (1, 1a) für ein Kraftfahrzeug mit einer Halterung (3, 3a) zur fahrzeugfesten Sicherung des Heckträgers (1, 1a), mit einem Tragrahmen (2, 2a), an dem die Halterung (3, 3a) angeordnet ist, und an dem wenigstens eine Funktionsplattform (6, 8; 6a, 8a) gelagert ist, die relativ zum Tragrahmen (2, 2a) um eine Klappachse (S₁, S₂) in eine kompakte Lagerstellung umklappbar und um eine Kippachse (K) in eine Be- und Entladestellung abkippbar gelagert ist, die in montiertem Zustand des Heckträgers (1, 1a) in Fahrzeugquerrichtung erstreckt ist, **dadurch gekennzeichnet, dass** die Klappachse (S₁, S₂) und die Kippachse (K) in einem spitzen Winkel relativ zueinander ausgerichtet und durch ein einteiliges Trägerprofil (4, 4a) definiert sind, das relativ zu dem Tragrahmen (2, 2a) um die Kippachse (K) drehbar gelagert ist, und an dem die wenigstens eine Funktionsplattform (6, 8; 6a, 8a) schwenkbeweglich gelagert ist.

2. Heckträger nach Anspruch 1, **dadurch gekennzeichnet, dass** zwei spiegelsymmetrisch zueinander klappbare Funktionsplattformen (6, 8; 6a, 8a) vorgesehen sind, die um jeweils eine Klappachse (S₁, S₂) am Trägerprofil (4, 4a) gelagert sind, und dass die beiden Klappachsen (S₁, S₂) und die Kippachse (K) des Trägerprofils in fahrzeugseitig montiertem Zustand des Heckträgers (1, 1a) in einer vertikalen Fahrzeugquerebene ausgerichtet sind.

3. Heckträger nach Anspruch 1 oder 2, **dadurch gekennzeichnet, dass** das Trägerprofil (4, 4a) einen Mittelabschnitt sowie zwei an gegenüberliegenden Stirnseiten des Mittelabschnitts winklig abragende Lagerzapfen (5a) aufweist, wobei der Mittelabschnitt um die Kippachse (K) drehbar gelagert ist, und wobei die Lagerzapfen (5a) jeweils eine Funktionsplattform (6, 8; 6a, 8a) um die Klappachse (S₁, S₂) drehbar lagern.

4. Heckträger nach Anspruch 3, **dadurch gekennzeichnet, dass** die Lagerzapfen als relativ zum Mittelabschnitt gegensinnig gekröpfte Profilschenkel (5a) gestaltet sind.

5. Heckträger nach einem der vorhergehenden Ansprüche, **dadurch gekennzeichnet, dass** der Mittelabschnitt zylindrisch gestaltet ist.

6. Heckträger nach einem der vorhergehenden Ansprüche, **dadurch gekennzeichnet, dass** die Profilschenkel (5a) zylindrisch gestaltet sind.

7. Heckträger nach einem der vorhergehenden Ansprüche, **dadurch gekennzeichnet, dass** dem Trägerprofil (4, 4a) Endanschläge zur Begrenzung der Kippbeweglichkeit um die Kippachse (K) zugeordnet sind.

8. Heckträger nach Anspruch 1, **dadurch gekennzeichnet, dass** der Tragrahmen (2, 2a) wenigstens eine Lageraufnahme (7, 7a) zur kippbeweglichen Lagerung des Trägerprofils (4, 4a) aufweist.

9. Heckträger nach einem der vorhergehenden Ansprüche, **dadurch gekennzeichnet, dass** die Profilschenkel des Trägerprofils (4, 4a) und/oder korrespondierende Lagerteile (6, 6a) jeder Funktionsplattform (6, 8; 6a, 8a) Endanschläge zur Begrenzung der Schwenkbeweglichkeit der Funktionsplattformen relativ zu den Lagerzapfen aufweisen.

## Claims

1. Rear rack (1, 1a) for a motor vehicle, having a holder (3, 3a) for vehicle-fixed securing of the rear rack (1, 1a), having a rack frame (2, 2a) on which the holder (3, 3a) is disposed, and on which at least one functional platform (6, 8; 6a, 8a) is mounted, which platform is foldable relative to the rack frame (2, 2a) about a folding axis (S₁, S₂) to a compact stow position and mounted to be tiltable about a tilting axis (K) to a loading and unloading position, extending along the vehicle transverse direction in the installed condition of the rear rack (1, 1a),
**characterized in that**
the folding axis (S₁, S₂) and the tilting axis (K) are oriented at an acute angle relative to each other and are defined by a one-piece support profile (4, 4a) which is mounted to be rotatable relative to the rack frame (2, 2a) about the tilting axis (K), and to which profile the at least one functional platform (6, 8; 6a, 8a) is mounted to be pivotable.

2. Rear rack according to claim 1, **characterized in that** two functional platforms (6, 8; 6a, 8a), foldable mirror-symmetrically to each other, are provided and each mounted on the support profile (4, 4a) about a respective folding axis (S₁, S₂), and **in that** the two folding axes (S₁, S₂) and the tilting axis (K) of the support profile are oriented in a vertical vehicle transverse plane in the vehicle-related installed condition of the rear rack (1, 1a).

3. Rear rack according to claim 1 or 2, **characterized in that** the support profile (4, 4a) has a central portion and two bearing bolts (5a) projecting at an angle on opposite end faces of the central portion, wherein the central portion is mounted to be rotatable about the tilting axis (K), and wherein the bearing bolts (5a) each pivot a functional platform (6, 8; 6a, 8a) about the folding axis (S₁, S₂).

4. Rear rack according to claim 3, **characterized in that** the bearing bolts are designed as profile legs (5a) which are cranked in opposite senses relative to the central portion.

5. Rear rack according to any one of the preceding claims, **characterized in that** the central portion is cylindrical.

6. Rear rack according to any one of the preceding claims, **characterized in that** the profile legs (5a) are cylindrical.

7. Rear rack according to any one of the preceding claims, **characterized in that** the support profile (4, 4a) is associated with end stops to limit tilting moves about the tilting axis (K).

8. Rear rack according to claim 1, **characterized in that** the rack frame (2, 2a) includes at least one bearing seat (7, 7a) for tiltable mounting of the support profile (4, 4a).

9. Rear rack according to any one of the preceding claims, **characterized in that** the profile legs of the support profile (4, 4a) and/or corresponding bearing parts (6, 6a) of each functional platform (6, 8; 6a, 8a) include end stops to limit pivoting moves of the functional platforms relative to the bearing bolts.

## Revendications

1. Support arrière (1, 1a) pour un véhicule automobile avec un dispositif de retenue (3, 3a) pour un attachement fixé au véhicule du support arrière (1, 1a), avec un cadre de support (2, 2a) sur lequel le dispositif de retenue (3, 3a) est arrangé, et sur lequel au moins une plateforme fonctionnelle (6, 8 ; 6a, 8a) est montée et rabattable par rapport au cadre de support (2, 2a) autour d'un axe de rabattement (S₁, S₂) vers une position d'arrimage compacte et montée de manière basculante autour d'un axe de basculement (K) vers une position de chargement et une position de déchargement, s'étendant le long de la direction transversale du véhicule à l'état installé du support arrière (1, 1a),
**caractérisé en ce que**
l'axe de rabattement (S₁, S₂) et l'axe de basculement (K) sont orientés selon un angle aigu l'un par rapport à l'autre et sont définis par un profilé de support (4, 4a) en une pièce, le profilé est monté de manière rotative autour de l'axe de basculement (K) par rapport au cadre de support (2, 2a) et sur lequel profilé l'au moins une plateforme fonctionnelle (6, 8 ; 6a, 8a) est montée de manière pivotante.

2. Support arrière selon la revendication 1, **caractérisé en ce que** deux plateformes fonctionnelles (6, 8 ; 6a, 8a) rabattables symétriquement l'une par rapport à l'autre sont prévues, les plateformes étant montées sur le profilé de support (4, 4a) autour d'un axe de rabattement (S₁, S₂) respectif, et **en ce que** les deux axes de rabattement (S₁, S₂) et l'axe de basculement (K) du profilé de support sont orientés dans un plan transversal du véhicule vertical à l'état installé du support arrière (1, 1a) côté véhicule.

3. Support arrière selon la revendication 1 ou 2, **caractérisé en ce que** le profilé de support (4, 4a) présente une partie centrale ainsi que deux tourillons de palier (5a) faisant saillie angulairement de faces frontales opposées de la partie centrale, la partie centrale étant montée de manière rotative autour de l'axe de basculement (K), et les tourillons de palier (5a) supportant de manière rotative autour de l'axe de rabattement (S₁, S₂) une plateforme fonctionnelle (6, 8 ; 6a, 8a) respective.

4. Support arrière selon la revendication 3, **caractérisé en ce que** les tourillons de palier sont conçus sous forme de branches de profilé (5a) coudées en opposition par rapport à la partie centrale.

5. Support arrière selon l'une quelconque des revendications précédentes, **caractérisé en ce que** la partie centrale est conçue sous forme cylindrique.

6. Support arrière selon l'une quelconque des revendications précédentes, **caractérisé en ce que** les branches de profilé (5a) sont conçues sous forme cylindrique.

7. Support arrière selon l'une quelconque des revendications précédentes, **caractérisé en ce que** des butées finales pour limiter le basculement autour de l'axe de basculement (K) sont associées au profilé de support (4, 4a).

8. Support arrière selon la revendication 1, **caractérisé en ce que** le cadre de support (2, 2a) présente au moins un logement de palier (7, 7a) pour monter le profilé de support (4, 4a) de manière basculante.

9. Support arrière selon l'une quelconque des revendications précédentes, **caractérisé en ce que** les branches de profilé du profilé de support (4, 4a) et/ou des parties de palier (6, 6a) correspondantes de chacune des plateformes fonctionnelles (6, 8 ; 6a, 8a) présentent des butées finales pour limiter le pivotement des plateformes fonctionnelles par rapport aux tourillons de palier.
